# EUROPÄISCHE PATENTSCHRIFT

(11) **EP 0 960 726 B1**
(45) Veröffentlichungstag und Bekanntmachung des Hinweises auf die Patenterteilung: **11.02.2004**
(21) Anmeldenummer: 99109661.1
(22) Anmeldetag: 15.05.1999
(51) Int. Cl.: B32B 17/10, C03C 27/12, B60J 1/00

(54) **Verbundglasscheibe für Kraftfahrzeuge**
Laminated glass for vehicles
Vitrage feuilleté pour automobiles

(30) Priorität: 23.05.1998 DE 19823124
(43) Veröffentlichungstag der Anmeldung: 01.12.1999
(73) Patentinhaber: ADAM OPEL AG, 65423 Rüsselsheim (DE)
(72) Erfinder: Hoschek, Wolfgang, 64546 Mörfelden-Walldorf (DE)
(74) Vertreter: Kümpfel, Heinz, Dipl.-Ing.

(56) Entgegenhaltungen:
- EP-A- 0 255 218
- DE-U- 9 313 394

## Beschreibung

Die Erfindung bezieht sich auf eine Verbundglasscheibe für Kraftfahrzeuge nach dem Oberbegriff des Patentanspruchs 1. In solche Scheiben sind häufig Metalldrähte als elektrische Leiter eingebettet. Diese werden über Kontaktelemente im Bereich des Scheibenrandes mit der elektrischen Anlage des Fahrzeugs (mit einem Kontaktelement des Fahrzeug-Kabelsatzes) verbunden. So sind elektrische Verbraucher, die in die Scheibe integriert oder an ihr angeordnet sind, ansteuerbar.

Beispiele hierfür sind Scheibenheizungen, Scheibenantennen, Glasbruchsensoren oder auch Leuchten. Dokumentiert ist dieser Stand der Technik beispielsweise in der DE 93 13 394 U1, DE 297 16 214 U1 oder auch in der DE 36 04 437 C2.

Die genannten Kabelsätze des Kraftfahrzeugs sind heute sehr aufwendig gestaltet. Mit der Zunahme der elektrischen Verbraucher im Fahrzeug, die nahezu in allen Bereichen der Karosserie angeordnet werden, steigt auch der Verkabelungsaufwand. Kabelsätze müssen geschützt vor schädigenden Einflüssen klapperfrei verlegt werden, was einen Aufwand wie beispielsweise in DE 38 20 724 C2 beschrieben vonnöten macht. Auch bekannte BUS-Systeme mindern zwar die Anzahl erforderlicher Verbindungen, ersetzen diese aber nicht vollständig. Jeder Verbraucher ist weiterhin an die elektrische Anlage anzuschließen.

Zur Vereinfachung von Kabelsatzstrukturen wurde bereits vorgeschlagen, einen Kabelbaum in mehrere Einzelelemente zu untergliedern, wobei diese dann nach der verlegung miteinander kontaktiert werden. Der Aufwand für eine sichere Verlegung bleibt hoch.

Es ist Aufgabe der Erfindung, den Aufwand, der bei der Verlegung von elektrischen Leitungen im Kraftfahrzeug zu tätigen ist, zu verringern, ohne daß Einschränkungen hinsichtlich der Raumausnutzung sowie der Funktion und Schadensanfälligkeit der elektrischen Anlage hinzunehmen sind.

Zur Lösung dieser Aufgabe wurde eine Verbundglasscheibe geschaffen, die die im Patentanspruch 1 angegebenen Merkmale aufweist und damit Teile des Fahrzeug-Kabelsatzes beinhaltet. Es wird also vorgeschlagen, Metalldrähte, die Bestandteil des Kabelsatzes sind, nicht in der Karosserie, wie bekannt, zu verlegen, sondern diese in die Verbundglasscheibe einzubetten und so bestimmte Raumabschnitte bei der Kabelverlegung zu überbrücken. Die Metalldrähte werden beidseitig im Bereich von Scheibenrändern mit Kontaktelementen versehen, so daß Anschlußstellen für herkömmliche Kabelsatz-Bestandteile vorhanden sind. So ist es vermeidbar, daß elektrische Leiter klapperfrei in Karosseriesäulen des Fahrzeugs verlegt werden müssen, was den Verlegeaufwand deutlich verringert. Gleichsam wird der ursprünglich für die Kabelverlegung vorzusehende Bauraum gewonnen. Ebensolche Vorteile können erreicht werden, wenn die Verbundglasscheibe Kabel-Querverbindungen enthält, die dann nicht im Dach oder an Querträgern des Fahrzeugs verlegt werden müssen. Da ein Teil des Kabelsatzes somit zur Scheibe gehört, kann auch die Anzahl der für das Kraftfahrzeug notwendigen Bauteile verringert werden. Des weiteren ist eine Gewichtsreduzierung mit der erfindungsgemäßen Lösung verbunden. Aufwendige Isolations- und Stützkonstruktionen entfallen. Die Montagezeit und -kosten werden reduziert, da hier keine Kabelmontage mehr nötig ist, sondern eine schnelle Steckkontaktierung nach der Scheibenmontage erfolgt.

Die Kabelverbindungen werden in der Scheibe vorteilhaft im Bereich von Scheibenrändern verlegt, so daß diese dort nicht bzw. fast nicht sichtbar sind.
Steckkontakte der Kabelverbindungen können gleichzeitig zur Kontaktierung an sich bekannter elektrischer Verbraucher genutzt werden, die in oder an der Scheibe angeordnet sind (Scheibenheizung, Antenne, Leuchten, Glasbruchsensoren, ...).

Details der Erfindung ergeben sich aus der folgenden Beschreibung eines Ausführungsbeispiels. Die zugehörige Zeichnung zeigt in schematischer Darstellungsweise eine Verbundglas-Heckscheibe eines Kraftfahrzeugs mit integrierten Metalldrähten.

In der angedeuteten Heckpartie eines Kraftfahrzeugs 1 ist eine Öffnung 2 für eine Heckscheibe 3 vorgesehen. Diese Heckscheibe 3 besteht aus an sich bekanntem Verbundglas, welches bei der Fahrzeugmontage an den Rändern der Öffnung 2 verklebt wird.

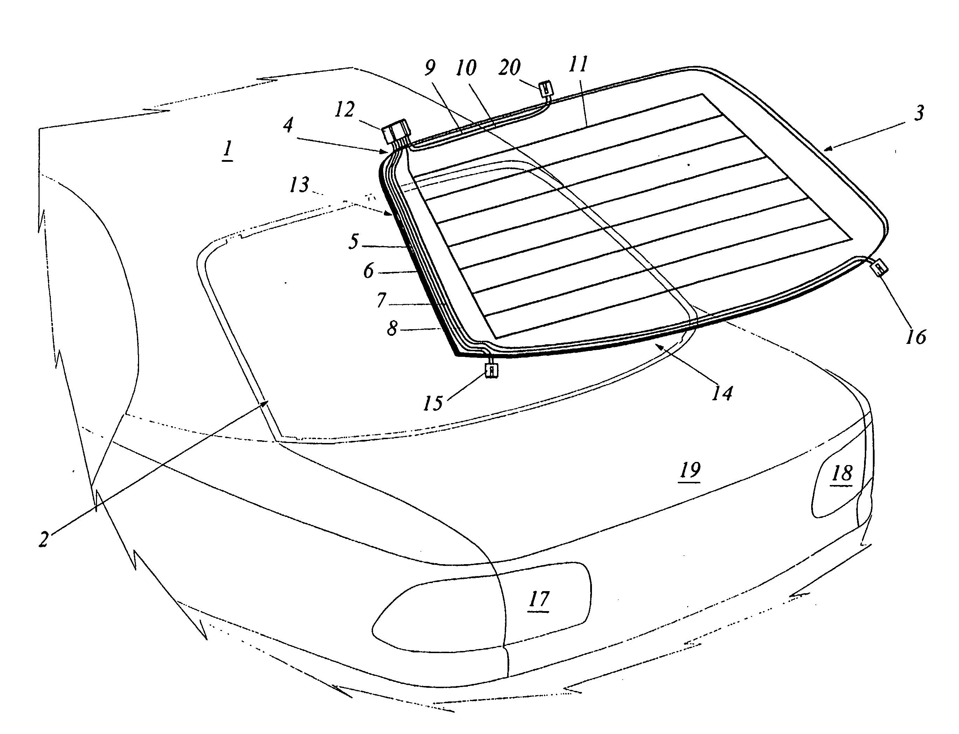

Beginnend vom linken oberen Scheibenrand 4 sind diverse Metalldrähte 5 bis 11 in die Scheibe 3 eingebettet. All diese Metalldrähte 5 bis 11 sind über nur ein Kontaktelement 12 mit der elektrischen Anlage des Kraftfahrzeugs 1 kontaktierbar, also mit einem Kabelbaumzweig verbindbar, der im Beispiel im Bereich der Öffnung 2 endet (linker oberer Rand der Öffnung 2). Ein entsprechend notwendiges Gegen-Kontaktelement ist in der Zeichnung nicht dargestellt. Prinzipiell kann das Kontaktelement 12 bei entsprechender Verlegung der Metalldrähte 5 bis 11 an jeder beliebigen Stelle des Scheibenrandes angeordnet werden.

Die Metalldrähte 5 bis 8 sind ausschließlich Bestandteil von Kabelverbindungen. Sie führen zu keinem in oder an der Scheibe 3 angeordneten Verbraucher, sondern verlaufen im Bereich eines Scheibenrandes 13 bis in den Bereich eines unteren Scheibenrandes 14, wo sie enden und ebenfalls über Kontaktelemente 15, 16 mit Kabelsatzabschnitten kontaktierbar sind. Beispielsweise könnten über diese Metalldrähte 5 bis 8 Heckleuchten 17, 18 in der Kofferraumklappe 19 des Fahrzeugs 1 angesteuert werden.

Die Metalldrähte 9 und 10 sind in vergleichbarer Weise entlang des oberen Scheibenrandes 4 zu einem Kontaktelement 20 verlegt, wo Kontakte zu einem weiteren elektrischen Verbraucher wie Heckscheibenwischer oder Schiebedach herstellbar sind. Obwohl hier nur eine relativ kurze Distanz in Fahrzeug-Querrichtung überwunden wird, kann diese Art der Verkabelung von Vorteil sein, da hier eine Kabelverbindung, die sonst zwischen Dachhimmel und Dachaußenhaut zu verlegen wäre, eingespart wird. Dies kann Package- und/oder Designvorteile mit sich bringen.

Der Metalldraht 11 stellt einen elektrischen Verbraucher dar, der in an sich bekannter Weise als Heckscheibenheizung/-antenne in die Heckscheibe 3 integriert ist. Er wird ebenfalls über das Kontaktelement 12 angeschlossen, so daß für den Kabelanschluß einseitig weiterhin nur eine Steckverbindung zu schaffen ist. Erfindungswesentlich ist, daß die Scheibe 3 eine Teilfunktion des Kabelsatzes übernimmt, also durch die Scheibe hindurch verlaufende Kabelverbindungen vorgesehen sind.

In vergleichbarer Weise kann die Frontscheibe des Kraftfahrzeugs 1 als Modul gestaltet sein, wobei beispielsweise Kabelverbindungen zwischen Motorraum und Dach oder Insassenraum integriert sein können. So könnte eine Kabelverbindung zu einer Innenraumleuchte, einem Innenraum-Temperatursensor oder zu einem Schiebedach durch Randbereiche der Frontscheibe verlaufen.

## Patentansprüche

1. Verbundglasscheibe (3) für Kraftfahrzeuge (1) mit zumindest einem darin eingebetteten Metalldraht (5 bis 11), welcher im Bereich eines Scheibenrandes (4, 13, 14) mit einem Kontaktelement (12, 15, 16, 20) versehen ist, **dadurch gekennzeichnet, daß** der Metalldraht (5 bis 10) Bestandteil einer Kabelverbindung zwischen zwei außerhalb der Verbundglasscheibe (3) liegenden Bauelementen der elektrischen Anlage des Fahrzeugs (1) ist und zumindest zwei Kontaktelemente (12, 15, 16, 20) in Bereichen der Scheibenränder (4, 13, 14) aufweist.

2. Verbundglasscheibe (3) nach Anspruch 1, **dadurch gekennzeichnet, daß** der Metalldraht (5 bis 10) über seine gesamte Länge im Bereich des Scheibenrandes (4, 13, 14) in die Verbundglasscheibe eingebettet ist.

3. Verbundglasscheibe (3) nach Anspruch 1 oder 2, **dadurch gekennzeichnet, daß** in oder an ihr an sich bekannte elektrische Verbraucher, wie Scheibenheizung, Antenne, Glasbruchsensor oder Bremsleuchte angeordnet sind, die über zumindest einen Metalldraht (11), der gemeinsam mit dem Metalldraht (5 bis 10), welcher die Funktion einer Kabelverbindung hat, über ein Kontaktelement (12) kontaktiert sind.

## Claims

1. Laminated glass pane (3) for motor vehicles (1) with at least one metal wire (5 to 11) which is embedded therein and which is provided with a contact element (12, 15, 16, 20) in the region of an edge (4, 13, 14) of the pane, **characterised in that** the metal wire (5 to 10) forms part of a cable connection between two components of the electrical system of the vehicle (1) which are located outside the laminated glass pane (3), and comprises at least two contact elements (12, 15, 16, 20) in regions of the pane edges (4, 13, 14).

2. Laminated glass pane (3) according to claim 1, **characterised in that** the metal wire (5 to 10) is embedded over its whole length in the laminated glass pane in the region of the pane edge (4, 13, 14).

3. Laminated glass pane (3) according to claim 1 or 2, **characterised in that** in or on it are arranged electrical appliances known in the art such as window heating, aerial, glass breakage sensor or brake light, which are contacted via a contact element (12) via at least one metal wire (11) which together with the metal wire (5 to 10) ¹which has the function of a cable connection.

## Revendications

1. Vitrage feuilleté (3) pour véhicules automobiles (1) avec au moins un fil métallique (5 à 11), incorporé dans celui-ci, fil muni d'un élément de contact (12, 15, 16, 20) dans la zone d'une bordure de vitre (4, 13, 14), **caractérisé en ce que** le fil métallique (5 à 10) fait partie d'une liaison par câble, établie entre deux composants se trouvant à l'extérieur du vitrage feuilleté (3) et appartenant à l'installation électrique du véhicule (1), et présente au moins deux éléments de contact (12, 15, 16, 20), placés dans des zones des bords de vitres (4, 13, 14).

2. Vitrage feuilleté (3) selon la revendication 1, **caractérisé en ce que** le fil métallique (5 à 10) est incorporé sur toute sa longueur dans le vitrage feuilleté, dans la zone de la bordure de vitre (4, 13, 14).

3. Vitrage feuilleté (3) selon la revendication 1 ou 2, **caractérisé en ce que**, dans ou sur lui, sont disposés des consommateurs électriques connus en soi, tel qu'un chauffage de vitres, une antenne, un capteur de rupture de vitre ou un avertisseur lumineux de freinage, qui, par l'intermédiaire d'au moins un fil métallique (11), sont mis en contact, conjointement avec le fil métallique (5 à 10) qui a la fonction d'une liaison par câble, par l'intermédiaire d'un élément de contact (12).
